# EUROPEAN PATENT APPLICATION

(11) **EP 3 361 357 A1**
(43) Date of publication of application: **15.08.2018**
(21) Application number: 17166268.7
(22) Date of filing: 12.04.2017
(51) Int. Cl.: G06F 3/038, G06F 3/0354, G06F 3/0346, G06F 21/32, H04N 5/232, H04N 5/44

(54) **DEVICE FOR CONTROLLING A POINTER**

(30) Priority: 08.02.2017 US 201715427793
(71) Applicant: All Now Corp, Coral Gables, Florida 33134 (US)
(72) Inventor: FIBLA GARCIA-BARZANALLANA, Jaume, 08915 BADALONA (ES); GARCIA PARRILLA, Javier, 43005 TARRAGONA (ES)
(74) Representative: Sugrañes Patentes y Marcas

(57) **Abstract**

The device for controlling a pointer comprises a body with a curved support base that supports the device on a work surface, determining a support point, said support base being adapted to tilt the device, maintaining a support point between the support base and the work surface, the device being provided with means for detecting the tilt of the device to detect variations in the tilt of the device that determine increases in the position of the pointer. The device is also provided with means for detecting actions to detect actions using the linear acceleration of the device on the work surface, advantageously being able to perform actions, such as clicking, without the need for components serving that purpose, such as buttons.

## Description

### Technical field of the invention

The device of the present invention is of the type that is suitable for controlling a pointer and is also suitable for controlling other remote devices.

### Background of the invention

There are known devices for controlling a pointer with means for detecting tilt of the device, causing the update of position of a pointer in a screen. An example of such devices is disclosed in document US5296871 that discloses a three-dimensional mouse for moving a pointer when moving the device. However, those devices for controlling a pointer require mechanical actuators, such as buttons, for detecting actions. Mechanical actuators not only renders more complex and difficult the assembly of the device, also makes the device prone to mechanical failures during usage.

Therefore, an objective of the present invention is to provide a mechanically simpler device for controlling a pointer.

### Description of the invention

The device for controlling a pointer of the present invention is of the type provided with a body with a curved support base that supports the device on a work surface, determining a support point, said support base being adapted to tilt the device, maintaining a support point between the support base and the work surface, the device being provided with means for detecting the tilt of the device to detect variations in the tilt of the device that determine increases in the position of the pointer.

Essentially, the device is characterized in that it is also the device provided with means for detecting actions to detect actions using the linear acceleration of the device on the work surface, advantageously being able to perform actions, such as clicking, without the need for components serving that purpose, such as buttons.

In a variant embodiment, the means to detect actions are adapted to detect the first peak after reaching a variation threshold of 0.003G, it is a predetermined threshold with an absolute value of 0.003G from a calibrated zero acceleration, where 1G=9.81m/s². In this way, it is possible for the noise in linear acceleration to not cause the erroneous detection of an action, since only when said threshold, which can be positive or negative depending on the direction of movement on each one of the axes, is exceeded does it mean that the device is moving due to a push made by the user, for example, with their hand.

It is also made known that the means for detecting actions are adapted to detect the second peak when, after having detected the first peak and stored its extreme value of acceleration, linear acceleration reaches 80% of the value of linear acceleration at the end of the first peak, but with the opposite sign. In this way, it is possible to advantageously detect the maximum braking point of the device, which will correspond to the second peak, from which acceleration will return to zero, and it can be concluded that its velocity, the integral of acceleration, will also be zero, such that after detecting these two peaks, the relevant and previously programmed action can be carried out based on the direction of movement of the device and even the value of accelerations in the first and second peak. Thus, for example, different actions can be carried out in the same direction based on the values reached in the first and second peak.

According to another characteristic of the invention, the support base has a spheroidal shape or a spherical shape, being, for example, a cap, such as a spherical cap or a spheroidal cap, that tilts the device 1 in any direction.

In a variant of interest, the support base covers the entire perimeter of the device, thus preventing the existence of edges between the support base and the rest of the body, providing the device with a better finish and improved ergonomics.

In another variant embodiment, the device comprises a compartment to house an accessory portable device, the compartment being provided with means of communication with the accessory device, in such a way that the data stored in the device can be transmitted to the accessory portable device, for example, to control the remote devices which can be controlled by means of the device through the accessory device, which can be a card with a long-lasting battery, in such a way that it can be a portable device.

According to another characteristic, the device is provided with means for obtaining biometric data, such a fingerprint sensor, and the biometric data obtained is transferred to the accessory device through the means of communication. Of course, it is expected that the accessory device also has means for obtaining biometric data, such as a fingerprint sensor, which identify the user so that they can then securely access their data and control the remote devices for which access has been previously configured.

According to another variant embodiment, the compartment further comprises means for charging the accessory device, which both charge the battery as well as transfer the information of the remote devices that can control the device.

In a variant embodiment, the device comprises processing means to calculate increases in the position of the pointer by using the tilt of the device, in such a way that an increase in the two-dimensional coordinates can be directly transferred, like a conventional mouse. Of course, it is also expected that the tilt of the device can be transferred directly, which can be advantageous for applications that need a tilt value.

It is made known that the device preferably comprises an accelerometer that provides accelerations on each one of the Cartesian axes. It is also expected that the accelerometer can be substituted or supplemented by other components, such as inclinometers or gyroscopes.

It is also made known that the device further comprises wireless means of communication that allow it to remotely communicate with remote devices, such as a screen.

In a variant of interest, the body of the device is provided with a screen, through which the user can receive information about the remote devices that they can control.

It is made known that the body of the device is provided with a face, preferably flat, opposite to the support base upon which the hand of the user will be preferably placed, and which will preferably have a screen.

It is also made known that the device further comprises a microphone and a speaker through which instructions can be emitted and the user can send additional voice commands. In a variant of interest, it is expected that the device further comprises a camera.

The accessory portable device of the device according to the invention is of the type that comprises means for obtaining biometric data of a user; means for activating a user profile from the biometric data obtained, enabling access to data associated with the activated user profile; and means for deactivating an activated user profile, disabling access to the data associated with the user profile, which comprise a sensor that upon activation deactivates the activated user profile. The portable device selects and activates a user profile from the different user profiles previously configured from the biometric data of a user, such as a fingerprint, to thus enable access to the data associated with the user profile that can be used by different peripherals forming part of the portable device, such as screens, radio frequency transmitters, light indicators, etc. Advantageously, access to the data associated with the user profile can be disabled by actuating a sensor, such as a touch sensor arranged on the surface of the device, which upon communicating its actuation to the means for activating user profiles, it enables the deactivation of the activated user profile. This allows the device of the present invention to be configured with multiple user profiles, each one associated with its respective data, which could, in part, be shared among different user profiles, only allowing access to the data corresponding to the user profile that corresponds to that of the user whose biometric data has been obtained. The data associated with the user profiles can be stored in the same memory, the access of which will be enabled or disabled by the means for activating or deactivating a user profile, for example, enabling or disabling reading of the address range of the memory that contains the data of the user profile. Of course, it is also expected that data associated with the user profile can be accessed in other ways, such as through an intermediate data management program that uses a data structure incorporating biometric data and optionally the type of data to be accessed to send back a data structure that contains the data obtained. It is expected that the means for obtaining biometric data of the user may be through a fingerprint sensor that captures the fingerprint of the user, as well as through a camera that captures the facial image of the user, a microphone that captures the voice of the user or any other sensor that obtains data that can categorize the user and possibly associate them with one of the user profiles previously established on the device. It is expected that the data associated with the user profiles may be, for example, credentials to access other remote devices that can be controlled by instructions sent, preferably, by radio frequency via the portable device, such as household appliances, locks, vehicles, etc., thus allowing the user to control from a distance said remote devices after activating the corresponding user profile. Of course, for each remote device, the portable device should have its remote device type configured, and therefore, the actions that the user can carry out with said remote device by means of the portable device. For example, several remote household devices will let the user determine the action to be carried out, for example, if the remote device is a television, whether to change the channel or change the volume through peripherals of the portable device, such as a touch screen. It is also expected that the action will be carried out automatically, so that after activation of the user profile, the device periodically sends radio signals that open the previously configured electronic locks. This way, it is possible that the device of the present invention incorporates data related to different user profiles, with their respective credentials, in such a way that only when a user associated with a user profile uses the device will they have access to control the remote devices that are only associated with their user profile. Of course, although the data associated with the activated user profile is preferably stored inside the device, it is also expected that it is stored in an external database, accessible through radio frequency.

The sensor of the accessory portable device can be adapted to have a touchpad, such that when the accessory portable device is held or manipulated by the hand, the activated user profile is advantageously deactivated, thus preventing another user who takes the accessory portable device from having access to the data associated with the user profile of the first user after the first user activated the user profile. Of course, if the first user who previously activated the user profile takes the accessory portable device, they would also proceed to deactivate the user profile, although in this case, this first user would only have to reactivate their user profile by providing their biometric data, such as a fingerprint. It is expected that when the means for obtaining biometric data is a fingerprint sensor, it is located on the surface of the accessory portable device, preferably in a location that coincides with the position of the user's thumb when they normally grip the device, thus facilitating the reactivation of the user profile of this first user after actuating the touch sensor and deactivating the user profile.

The sensor of the accessory portable device can be arranged on the surface of the accessory portable device, favoring contact with the sensor when taking the accessory portable device and thus preventing another user from having access to the data of the user profile of the previous user.

The sensor of the accessory portable device can further comprise a conductive sheet that favors contact between the fingers of the user and the sensor when the user takes the accessory portable device. This conductive sheet can be made from graphene, allowing the sheet to be thin and not form bumps on the surface of the device. Also, the sheet could comprise graphene, for example a film or film portion of graphene placed on a polymeric substrate.

It is envisaged that each user profile of the accessory portable device includes previously obtained biometric data patterns of one or several users that are associated with a user profile, advantageously allowing the biometric data obtained by the means for obtaining biometric data to be associated with the biometric data patterns in order to thus determine whether a user profile should be activated, allowing access to the data associated with said user profile.

The means for deactivating an activated user profile of the accessory portable device are disabled while the means for obtaining biometric data of a user are actuated, preventing a user profile from being activated and deactivated simultaneously, and allowing the user to be identified.

The accessory portable device can further comprise means for disabling during a predetermined time the means for deactivating a user profile after activating a user profile, allowing the user to interact with the accessory portable device, during this predetermined time after activation of a user profile, without the user profile being deactivated, accessing, for example, menus via device peripherals, such as buttons or a touch screen or even via a camera or microphone, responding to gestures or voice commands. This way, the user is able to manipulate the device for a predetermined time.

The accessory portable device can further comprise alert means that can be activated during a predetermined time, during which the means for deactivating a user profile are disabled, allowing the user to know the time when they can manipulate the device without deactivating the previously activated user profile. It is expected that said alert means can be a visual, such as a light indicator, a meter that is displayed on the screen, a sound indicator, or any other alert means that allow the user to determine that the means for deactivating a user profile are disabled.

The accessory portable device can further comprise means for emitting radio frequencies, the means for emitting radio frequencies being adapted to emit a signal based on the data associated with the activated user profile to control a remote device. Of course, it is expected that the radio frequency means transmit signals based on the data associated with the activated user profile using instructions from the user, such as the control of household appliances, as well as in an automatic way, such as the automatic opening of locks.

The accesory portable device can further comprise a screen, the screen being adapted to display images contained in the data associated with the activated user profile. Such data can be, for example, an identity document of the user. Of course, it is expected that the device can have more than one screen, for example, a screen on its front side and a screen on its back side, which display the front and back sides of an identity document. It is also expected that these images can be, for example, transportation tickets, such as train or plane tickets, or images corresponding to credit cards. It is expected that after activating the user profile the device allows for the selection of the image to be displayed by means of a menu. This image can also correspond to a control interface of a remote device, such as a household appliance, in such a way that, given the touch screen, the user can interact with the remote device. Preferably, the screen would be an energy-efficient screen, such as an electronic ink screen, although it is also expected that the screen can be of another type, such as an OLED screen or others.

The accessory portable device can further comprise means for capturing energy, which power the device or charge its batteries. Naturally, it is expected that the accessory portable device has some means of energy storage, such as a battery. It is expected that this battery can be charged in a known way by connecting the device to a source of electrical energy, for example, by means of a connector, such as a USB connector. It is also expected that the battery can be charged by induction, being able to use both the antenna of the means for emitting radio frequencies as well as an inductor for that purpose. It is also expected that the means for capturing energy are means for converting energy, such as solar panels that generate electrical energy from light or means of converting kinetic energy into electrical energy.

It is envisaged that the screen of the accessory portable device has a touchpad, allowing the user to interact with the information that is displayed on the screen, such as menus or control interfaces, which thus allow it to have buttons, dials and other controls on the screen through which the user can control both the portable device as well as the remote devices.

The means for obtaining biometric data of a user of the accessory portable device can comprise a fingerprint sensor, means for capturing the image or a microphone, thus allowing biometric data to be obtained that will be compared to previously stored biometric data in order to determine whether they correspond to a user profile.

When the accessory portable device comprises a touch screen, the means for obtaining biometric data can be the touch screen, allowing the information to be displayed and the instructions to be introduced through that peripheral.

The accessory portable device further comprises means for updating the user profiles and their associated information, thus incorporating, eliminating and modifying user profiles, users associated to said user profiles and information related to the remote devices that could be controlled, such as their credentials. These means for updating allow for, after connecting the device to a base, that can be the device for controlling a pointer of the present invention, for example, by means of electrical contact terminals that allow coupling between the accessory portable device and the base, the update of the user profiles and their associated data. Said base can be connected to a computer or other device through which, by means of a suitable program, it manages the user profiles and the associated data that will be loaded onto the device, for example, by means of a series connection established between the base and the device through the electrical contact terminals.

The accessory portable device can have the shape of a card, allowing it to be comfortably transported by the user in their wallet or pocket, also allowing the base, which is the device for controlling a pointer to have a slot for the insertion of the card so that it can be updated.

### Brief description of the drawings

As a complement to the description provided herein, and for the purpose of helping to make the characteristics of the invention more readily understandable, the present specification is accompanied by a set of drawings constituting an integral part of the same, which, by way of illustration and not limitation, represent the following:
Figures 1a to 1e show pitch movements and actions on the device of the invention;
Figure 2a to 2e show roll movements and actions on the device of the invention;
Figures 3a to 3c show graphs of the evolution of time of the accelerations during an action;
Figure 4 shows an operating diagram of the device of the invention;
Figure 5 shows an upper perspective view of the device of the invention;
Figures 6a to 6c show another variant embodiment of the device; and
Figures 7 to 10 show other embodiments of the device of the invention.

### Detailed description of the drawings

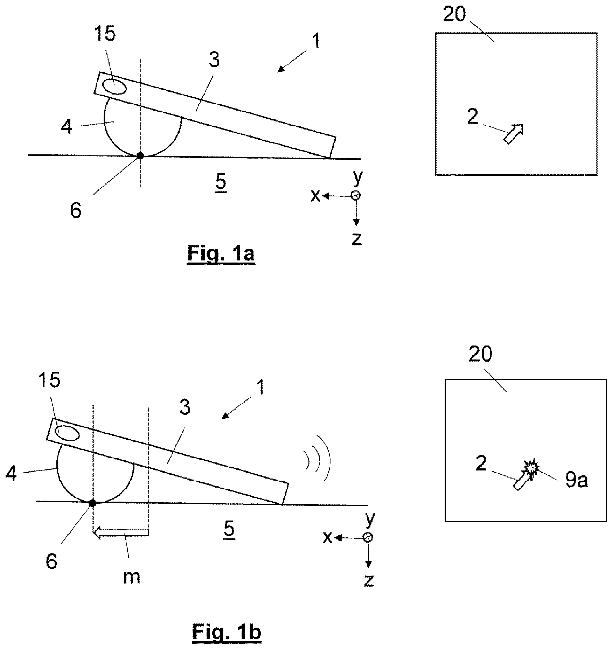

Figure 1a shows a side view of the device 1 for controlling the pointer 2 of the present invention. As can be observed, the device 1 is provided with a body 3 with a curved support base 4 that supports the device on a work surface 5, determining a support point 6.

The support base 4 is adapted to tilt the device 1, maintaining a support point between the support base 4 and the work surface 5, the device being provided with means for detecting tilt 7 that detect variations in the tilt Δ*ϕ*, Δ*θ* of the device 1, for example, by reading the accelerations on each one of the axes X, Y and Z provided by an accelerometer 11.

In this way, the device 1 determines the increases in the two-dimensional position Δa, Δb of a pointer 2, for example, a pointer 2 on a remote screen 20 in the way shown in Fig. 1a. Said increases in the position Δa, Δb of the pointer 2 on the screen 20 will be sent by wireless means of communication 12 provided in the device 1. It is also expected that in other embodiments, the wireless means of communication 12 alternatively or additionally transmit the tilt Δ*ϕ*, Δ*θ* of the device 1 to a remote device that changes the tilt Δ*ϕ*, Δ*θ* of the device 1 and calculates the increases in the position Δa, Δb of the pointer 2 in the directions a and b of the screen 20. Although the figures show the pointer 2 as a pointer 2 of a screen 20, it is also expected that the pointer 2 may be other types of controls that can be actuated by means of the device 1 of the present invention. For example, linear as well as two-dimensional dials and other controls of door opening systems, lighting systems, multimedia systems or automation systems, which open or close doors by means of actuating electronic locks, adjust the intensity of light appliances, or change the volume of a stereo, preferably supporting the device 1 on a work surface 5.

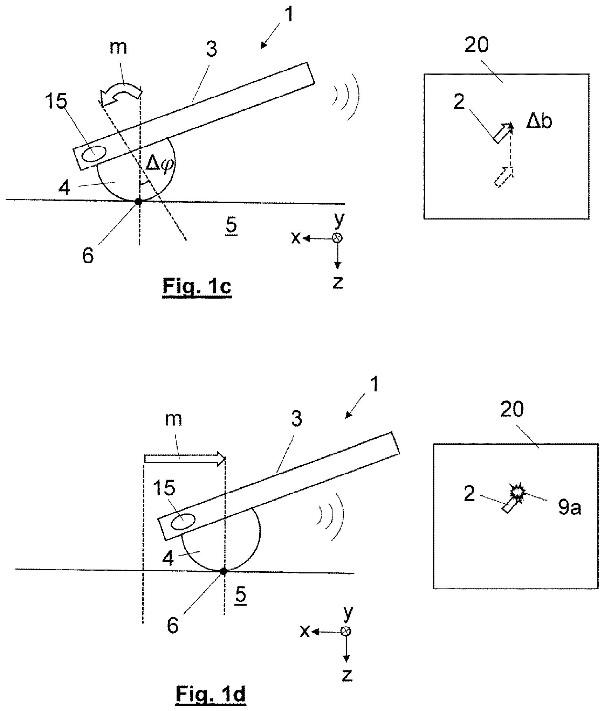

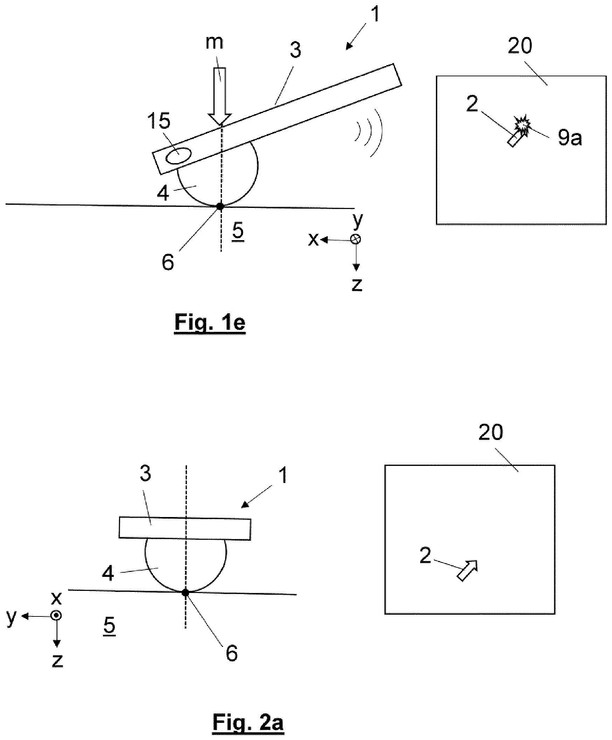

As described below, the first set of figures 1 a to 1e show a side view of the device 1 through which different interactions between the device 1 and the pointer 2 of a screen 20 are shown.

In Fig. 1a, the device 1 at rest can be observed, which through its curved support base 4 supports the device 1 on a work surface 5, determining a support point 6. In this case, the device 1 is in a stable position, the rear part of the body also being supported on the work surface 5. This stable position is advantageous for calibrating the accelerometer 11, since it is not subject to external forces or vibrations, contrary to when the device 1 is actuated by a user, in the way that is described below.

It is observed that the body 3 of the device 1 is provided with a face 14 opposite to the support base 4, this flat or essentially flat face 14, in addition to incorporating a screen as shall be seen further on, uses the device 1 as a pointer or mouse, being actuated by the hand of the user when supporting the hand on the flat face 14 of the body 3, with the user moving their wrist in such a way that the tilt and movement of the hand is directly transmitted to the device 1. This control can also be performed with other parts of the body, such as a foot, by supporting the foot on the flat face 14. It is also observed that the device 1 has means for obtaining biometric data 15, such as the fingerprint sensor shown in the device 1 of the Figure 1a. As can be seen, the fingerprint sensor is arranged on one side of the body 3, such that the thumb is placed upon said fingerprint sensor during normal use of the device 1 by the hand. Of course, it is expected that the fingerprint sensor can be found in other places, including both sides in order to allow both left-handed and right-handed users to use the device 1.

Figure 1b shows the device 1 of the Figure 1 a in which the device 1 has been moved, for example, by pushing it with a hand in the direction shown by the arrow m; this movement will cause variations in the linear acceleration on the axis X, aₓ, that, as described further on, allows an action 9a to be detected. This action can be, for example, clicking the pointer 2, although it can be configured to be any other action that is to be carried out by a remote device to which the device 1 has been connected and is sending information, such as an on/off action, the execution of a specific computer program, a pause when a video is playing, etc. Of course, when the device 1 detects actions 9a by means for detecting actions 9, the operation of which shall be described further on, the device 1 will send this action by radio frequency through the wireless means of communication 12 to the remote device, such as the screen 20.

Unlike the situation shown in Figure 1b, the Figure 1c shows a tilt variation Δ*ϕ* of the device 1, carried out, for example, by a user with their hand on the device 1 as shown by the arrow m. In this case, the pointer 2 of the screen 20 that was initially in an initial position, previously shown in Figures 1 a and 1 b, will now be in the position shown in Figure 1c, increasing its position Δb proportionally to the tilt Δ*ϕ* carried out on the device 1.

Of course, since the support base 4 has a spheroidal shape, specifically a spherical shape in the variant shown, which could be, for example, a cap, it allows the tilt Δ*ϕ*,Δ*θ* of the device 1 at any angle on said support base 4, such that the pointer 2 moves simultaneously in direction a as well as in direction b. It is also expected that although the means for detecting actions 9 detect actions 9a or events from the linear acceleration on each of the axes x, y, z, in other words, their accelerations aₓ, a_{y}, a_{z} of the device 1 on the work surface are monitored separately and an action or event is detected independently on each axis, x, y, z, an action or event can be detected simultaneously on one, two or even three axes, which will configure specific actions when, for example, an action is detected simultaneously on the axes x and y, such as a diagonal movement on the work surface 5. Of course, depending on the direction of the accelerations on the x, y, z axes, it can be known whether the movement of the device 1 has been in one direction or another, such that different actions 9a can be established based on the direction in which the device 1 has moved on the axis x, y, z.

Figure 1d shows the device 1 of the Figure 1c which, maintaining the tilt Δ*ϕ* by which the position of the pointer 2 of the screen 20 increased the position Δb, moves linearly as shown by the arrow m on the work surface 5 which will determine an action 9a. Of course, if the device 1 tilts while the movement is carried out, the pointer 2 will move proportionally.

Figure 1e shows the device 1 upon which, maintaining the same tilt Δ*ϕ*, a movement or force is made, such as striking the flat face 14 with the fingers of the hand. It has been seen that this action on the device 1 on the axis z generates a signal on the accelerometer that is analogous to the signal that is generated when moving the device on the work surface 5, in other words, in the directions x and y. In this way, it is possible, by detecting the action 9a by striking the device on the face 14 opposite to the support base 4, to emulate the operation of a button, without needing to provide a space for the button, such that the entire face 14 opposite to the support base 4 remains free and can be used, for example, as a screen 13.

Figure 2a shows a front view of the device 1, equivalent to the resting position previously shown in Figure 1 a.

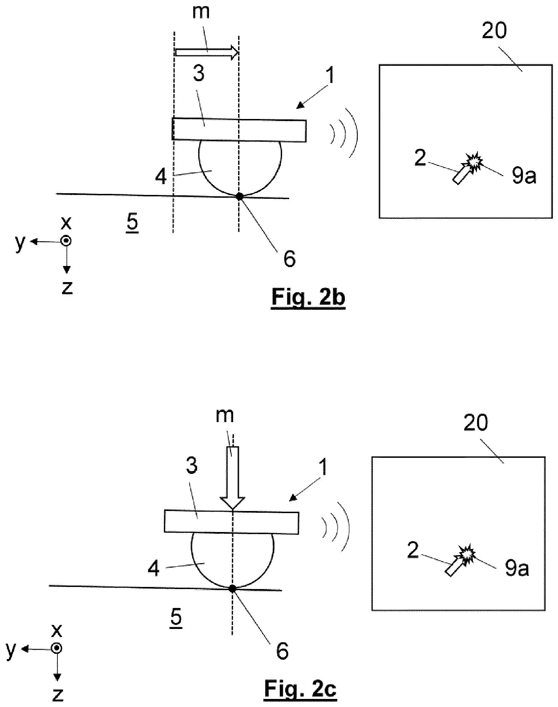

Figure 2b shows movement according to the arrow m of the device 1, causing an action 9a on the screen 20.

Figure 2c shows, from another perspective, the emulation of a click carried out when a user strikes the device 1 with a finger, emulating the actuation of a button on a conventional mouse.

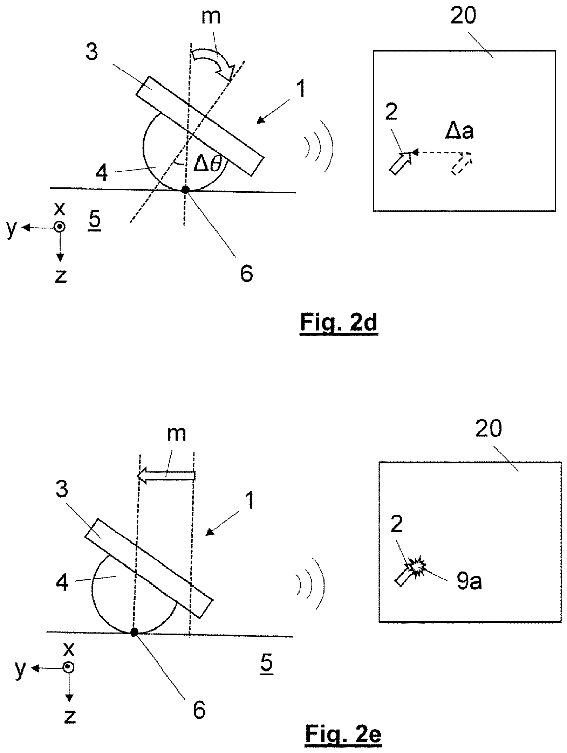

Figure 2d shows an example of the tilt of the device 1 in another direction. As can be seen, the means for detecting tilt 7 of the device 1 detect variations in the tilt Δ*θ* of the device 1, determining increases in the position Δa of the pointer 2. Likewise, maintaining the tilt Δ*θ* of the device 1, actions 9a can be carried out, for example, by carrying out a movement similar to that explained above, for example, as shown by the arrow m in Figure 2e.

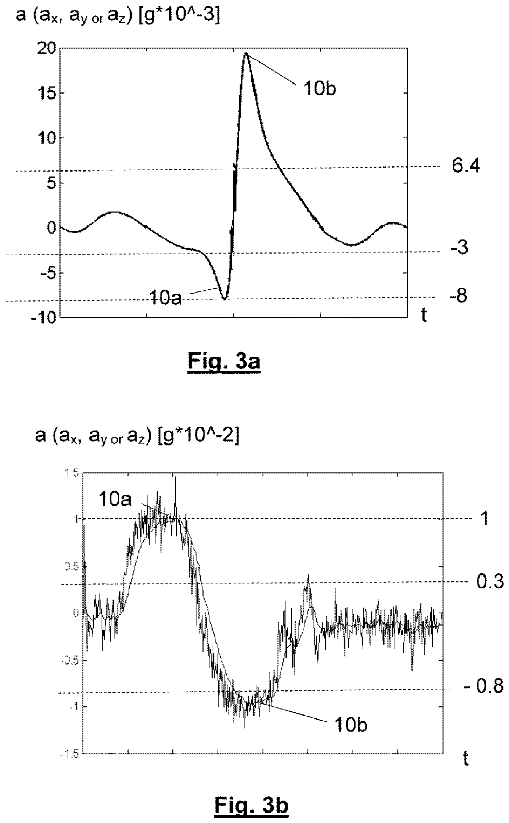

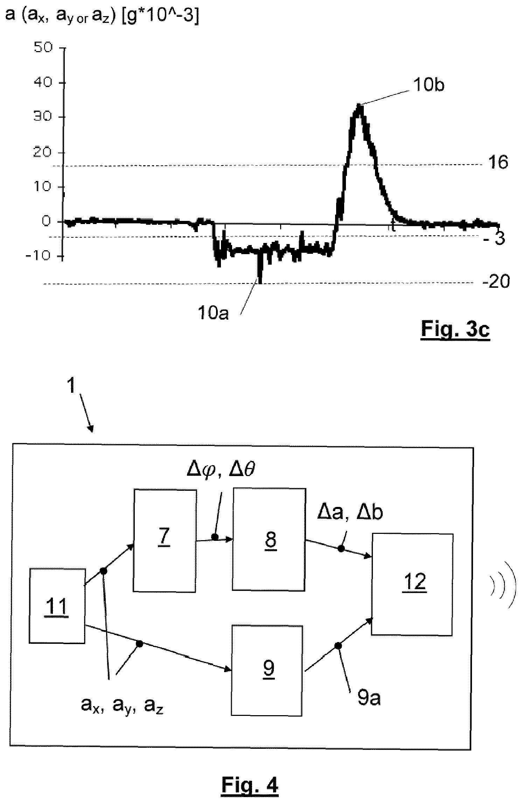

Figures 3a, 3b and 3c show three graphs with linear acceleration variation on the axes x, y or z (aₓ, a_{y}, a_{z}) of the device 1 on the work surface.

As can be observed in these graphs, the linear accelerations aₓ, a_{y}, a_{z} during the movements previously shown by the arrow m, and after eliminating possible noise, show two peaks 10a, 1the accelerations of which have an opposite sign, the first peak 10a corresponding to the instant of maximum acceleration after which it begins to brake, and the second peak 10b corresponding to the instant of maximum braking. Advantageously, the device 1 is provided with means for detecting actions 9 given the linear acceleration which are adapted to detect these peaks 10a, 10b to thus determine if there was linear movement and an associated action 9a had to be carried out, if it was suitably programmed.

Advantageously, the means for detecting actions 9 are adapted to detect the first peak 10a after reaching a predetermined threshold of an absolute value of 0.003G. In the graph shown in Figure 3a, it is observed that acceleration reaches said predetermined threshold when it reaches the value -3, equivalent to -0.03G, since the graph is shown on a scale of thousandths of G. After this threshold, acceleration continues until it reaches an extreme value, in this case a minimum, which forms the first peak 10a, the value of which is -8, equivalent to - 0.08. Therefore, to detect the second peak 10b, one must wait for acceleration to reach 80% of the linear acceleration value of the first peak 10a, of the opposite sign, which is the value 6.4, equivalent to 0.064G, to thus confirm detection of the second peak 10b, the maximum value of which will be around 20.

Figure 3b shows another graph in which the initial sign of acceleration is positive. It is observed that said Figure 3b shows both a noisy signal coming from the accelerometer 11 as well as a conveniently filtered signal, for example, through a low-pass filter, which will be the one used by the means for detecting actions 9. Therefore, the means for detecting actions 9 will be adapted to detect the first peak 10a after reaching a variation threshold of 0.003G. In the graph shown in Figure 3b, it is observed that acceleration reaches said predetermined threshold when it reaches the value 0.3, equivalent to 0.03G, since the graph is shown on a scale of hundredths of G. After this threshold, acceleration continues until it reaches an extreme value, in this case a maximum, which forms the first peak 10a, the value of which is 1, equivalent to 0.01 G. Therefore, to detect the second peak 10b, one must wait for acceleration to reach 80% of the linear acceleration value of the first peak 10a, of the opposite sign, which is the value -0.8, equivalent to -0.08G, to thus confirm detection of the second peak 10b, the extreme value of which will be around -1, -0.01 G.

Figure 3c shows a third graph in which once again the initial sign of acceleration is negative. The means for detecting actions 9 will be adapted to detect the first peak 10a after reaching the predetermined threshold of an absolute value of 0.003G. In the graph shown in Figure 3c, it is observed that acceleration reaches said predetermined threshold when it reaches the value -3, equivalent to -0.03G, since the graph is shown on a scale of tenths of G. After this threshold, acceleration continues until it reaches an extreme value, in this case a minimum, which forms the first peak 10a, the value of which is -20, equivalent to -0.02G. Therefore, to detect the second peak 10b, one must wait for acceleration to reach 80% of the linear acceleration value of the first peak 10a, of the opposite sign, which is the value 16, equivalent to 0.016G, to thus confirm detection of the second peak 10b, the extreme value of which will be around 3, -0.03G.

Figure 4 shows an operating diagram of the device 1 of the present invention, as shown in said diagram, the device 1 is provided with an accelerometer 11, that will provide the linear accelerations on the different axes x, y, z, in other words, aₓ, a_{y}, a_{z} to both the means for detecting tilt 7 of the device in order to detect variations in the tilt Δ*ϕ*,Δ*θ* of the device 1 and the means for detecting actions 9 to detect the actions 9a given the peaks 10a, 10b of acceleration, in the way shown previously. These actions 9a, along with increases in the position Δa, Δb of the pointer 2 that would have been calculated in the processing means 8 by using the increase in the tilt Δ*ϕ*, Δ*θ*, will be send by the wireless means of communication 12 of the device 1 to a remote device, such as a screen 20 in which the pointer 2 will be adequately positioned and the corresponding actions 9a will be carried out.

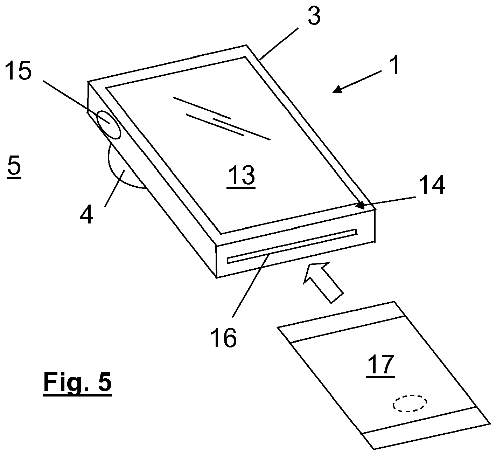

Figure 5 shows a perspective view of the device 1 of the present invention, in which the upper face of the device 1 can be observed, in which it can be observed that the body 2 is provided with a screen 13 on said face 14, which is flat in the variant shown, opposite to the support base 4.

In Fig. 5, it is also observed that the device 1 further comprises a compartment 16 to house an accessory device 17, such as a card, the compartment 16 being provided with means of communication 18 with the accessory device, as well as means for obtaining biometric data 15 in the form of a fingerprint sensor.

The accessory device 17 is an accessory portable device that can be provided with means for activating a user profile using the biometric data obtained, enabling access to data associated with the activated user profile. The means will be formed by suitably programmed sets of processors and memories. The accessory device 17 further comprises a screen, preferably with a touchpad, adapted to display images contained in the data associated with the activated user profile. The accessory device 17 can be further provided with means for deactivating an activated user profile, disabling access to data associated with the user profile, which comprise a sensor that, upon activation, deactivates the activated user profile. This sensor has a touchpad; specifically, it is made up of a conductive sheet of graphene, or a substrate comprising a film or film portion of graphene, arranged on the surface of the device, which occupies both the front side and the back side of the accessory device 17. Internally, the accessory device 17 also has an antenna that forms part of means for emitting radio frequencies, the means for emitting radio frequencies being adapted to emit a signal based on the data associated with the activated user profile. Internally, the accessory device 17 further comprises means for capturing energy to charge the battery of the accessory device 17 and thus extend its life. These means for capturing energy comprise means for converting energy, such as means for converting kinetic energy into electrical energy.

Thus, the biometric data obtained by the means for obtaining biometric data 15 is transferred to the accessory device 17 through the means of communication 18. It is also expected that the compartment 16 further comprises means for charging 19 the accessory device 17.

Optionally, it is expected that the device 1 comprises a microphone and speaker set, as well as a camera.

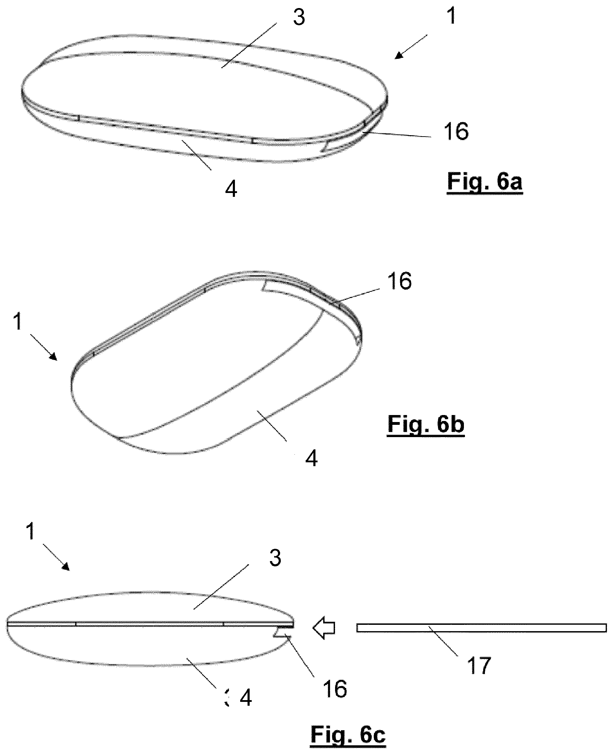

Figures 6a to 6c show another variant embodiment of the device 1 of the present invention in which the support base 4 has the shape of a spheroidal cap and covers the entire perimeter of the device 1. It is expected that in this variant embodiment, although the face 14 opposite to the support base 4 is not flat, it can have a screen, for example, a curved screen.

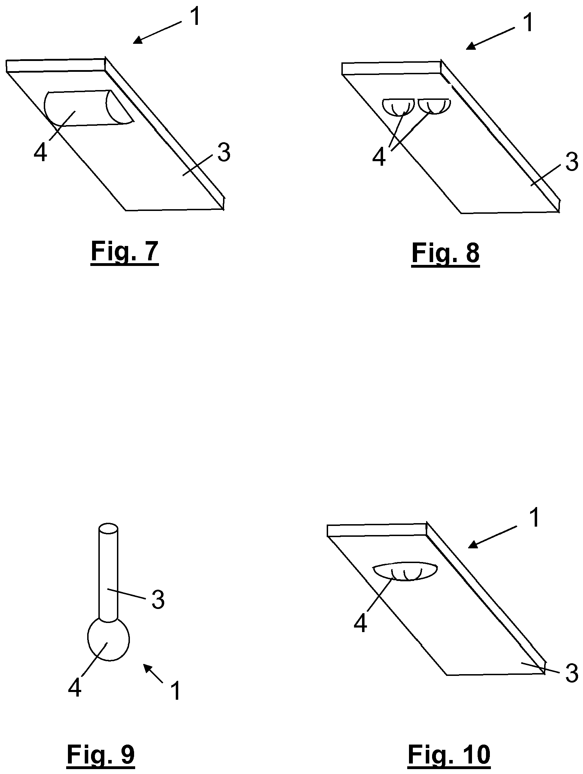

Figures 6, 7, 8 and 9 show other variant embodiments of the device 1 of the present invention with other shapes of the support base 4.

As shown, the device 1 of the present invention comprises a biometric detector 15, a screen 13, optionally with a touch system, and wireless means of communication 12. It is expected that these wireless means of communications 12 allow the device 1 to connect to a server wherein the biometric data will be stored, and a series of remote devices along with their characteristics, for example, in the case of the screen 20, its resolution and the type of actions 9a supported.

It is expected that these remote devices can be doors, lighting systems, multimedia systems, automation systems, etc.

In the way previously described, the device 1 is also designed to carry out the functions of a mouse, with the particularity of being able to use it on any surface since the movement of the pointer 2 will be carried out by a pivoting movement on its spheroidal base. In any case, it can work like a conventional mouse by moving on a flat surface or like a 3D mouse by moving in the air.

Advantageously, the device 1 does not have push-buttons, such that to carry out the click function, it must be raised quickly, and to make a dynamic movement, it must be quickly moved forward or backward, or to the left or right, in the way previously shown.

The biometric detector allows each user to interact with the remote devices depending on the configuration that has been previously assigned to it. Upon identifying a user through the means for obtaining biometric data 15, the device 1 will be activated and the remote devices detected to which the user has access will appear on the screen 13. Upon selecting one of them, its information and the keyboard to interact with it appears.

Some of the actions that the user can carry out with this apparatus are opening and closing the doors of their house, adjusting lighting in the room, or turning up or down the volume of the stereo or the temperature of the air conditioning without needing to have a remote control or a key for each one or having to get up to activate switches or dials.

It is expected that the device 1 interacts with the remote devices that appear on the screen, since they are those that are found within its radius of action. Both interaction and detection with the automated or household devices are carried out when the apparatus wirelessly interacts with the sensors arranged on these remote devices.

As previously described, it is expected that the device 1 has a compartment 16 to be able to house a portable accessory device 17 with biometric activation, such as a card. It is expected that said compartment 16 is provided with means of communication 18 with the accessory device 17, through which it can provide an electrical charge and update the data for its operation and assignment of users, since it is expected that the device 1 wirelessly connects to the server that manages the databases.

It is also expected that the device 1 is provided with a camera through which QR codes of the remote devices can be read to be able to display data such as the user's manual that the server has on the screen 13 of the device 1.

It is expected that the interaction with the remote devices can be through a virtual keyboard that will appear on the screen 13 and will be activated by the touch device or by a voice thanks to the incorporated microphone or through the mouse on those devices that require it. The speaker will indicate via sound the warnings emitted by the devices, such as their shutdown or the need to change parameters.

Another interesting particularity involves security; since the user is biometrically registered in a membership database, in order to use it, it must be activated by the means for obtaining biometric data 15; this prevents a person from using the device 1 with the attributes of another user who had been identified initially, since when the device has been inactive for some time, it is expected to disconnect and it is necessary for the user to re-identify himself biometrically for it to operate. It can give different attributes to different users, preventing, for example, children from interacting with devices or accessing areas that are dangerous to them.

This device 1 reduces remote controls and security keys to one single device 1 and increases security due to its biometric personalization. At the same time, interaction with the remote devices can be carried out in several ways, making its control more accessible without the need, even in the case of its use as a mouse, to have proper surfaces for its operation.

It is possible to use the mouse to control wheelchairs or other devices actuated by a motor for people who are handicapped or have a physical disability, since the signal system generated by the accelerometer and the gyroscope control the speed and direction of this type of device, fastening the mouse with a band to the head, foot, arm or other part of the mobile body.

## Claims

1. A device (1) for controlling a pointer (2), provided with a body (3) with a curved support base (4) that supports the device on a work surface (5), determining a support point (6), said support base being adapted to tilt the device, maintaining a support point between the support base and the work surface, and the device being provided with means for detecting the tilt (7) of the device to detect variations in the tilt (Δ*ϕ*,Δ*θ*) of the device that determine increases in the position (Δa, Δb) of the pointer, and the device also being provided with means for detecting actions (9) to detect actions (9a) using the linear acceleration (aₓ, a_{y}, a_{z}) of the device on the work surface.

2. The device (1) according to the preceding claim, **characterized in that** the means for detecting actions (9) using the linear acceleration (aₓ, a_{y}, a_{z}) of the device on the work surface (5) are adapted to detect peaks (10a, 10b) of the linear acceleration.

3. The device (1) according to the preceding claim, **characterized in that** the means for detecting actions (9) are adapted to detect a first peak (10a) and a second peak (10b) of the linear acceleration (aₓ, a_{y}, a_{z}).

4. The device (1) according to the preceding claim, **characterized in that** the means for detecting actions (9) are adapted to detect a first peak (10a) after reaching a variation threshold of 0.003G.

5. The device (1) according to the preceding claim, **characterized in that** the means for detecting actions (9) are adapted to detect the second peak (10b) when the linear acceleration reaches 80% of the value of the linear acceleration of the first peak, with the opposite sign.

6. The device (1) according to any one of the preceding claims, **characterized in that** the support base (4) has a spheroidal shape.

7. The device (1) according to any one of the preceding claims, **characterized in that** the support base (4) covers the entire perimeter of the device (1).

8. The device (1) according to any one of the preceding claims, **characterized in that** it further comprises a compartment (16) to house an accessory device (17), the compartment being provided with means of communication (18) with the accessory device.

9. The device (1) according to the preceding claim, **characterized in that**, the device being provided with means for obtaining biometric data (15), the biometric data obtained is transferred to the accessory device (17) through the means of communication (18).

10. The device (1) according to any one of the claims 8 to 9, **characterized in that** the compartment (16) further comprises means for charging (19) the accessory device (17).

11. The device (1) according to any one of the preceding claims, **characterized in that** it comprises processing means (8) to calculate increases in the position (Δa,Δb) of the pointer by using the tilt (Δ*ϕ*,Δ*θ*) of the device.

12. The device (1) according to the preceding claim, **characterized in that** the processing means (8) calculate increases in the position (Δa,Δb) of the pointer when the increase of the tilt (Δ*ϕ*,Δ*θ*) of the device reaches a predetermined tilt threshold.

13. The device (1) according to any one of the preceding claims, **characterized in that** it further comprises wireless means for communication (12).

14. The device (1) according to any one of the preceding claims, **characterized in that** the body (3) is provided with a screen (13).

15. The device (1) according to any one of the preceding claims, **characterized in that** it comprises means for obtaining biometric data (15).
